# EUROPÄISCHE PATENTANMELDUNG

(11) **EP 1 418 664 A2**
(43) Veröffentlichungstag der Anmeldung: **12.05.2004**
(21) Anmeldenummer: 03023475.1
(22) Anmeldetag: 18.10.2003
(51) Int. Cl.: H02P 6/00

(54) **Synchronmotor**

(30) Priorität: 08.11.2002 DE 10251977
(71) Anmelder: Arnold Müller GmbH & Co. KG, 73230 Kirchheim/Teck (DE)
(72) Erfinder: Pfaff, Bernhard, 88048 Friedrichshafen (DE); Schnitzer, Wolfgang, 72793 Pfullingen (DE)
(74) Vertreter: Kratzsch, Volkhard, Dipl.-Ing.

(57) **Zusammenfassung**

Die Erfindung betrifft einen Synchronmotor mit permanentmagnetischer Felderregung, mit einer mehrphasigen Ankerwicklung (11) und einem die Ankerwicklung (11) an ein Spannungsnetz (10) anschließenden, mehrphasigen Umrichter (12), sowie mit einer Steuerlogik (14) zur Umrichtersteuerung. Zwecks Gewährleistung eines zuverlässigen Schutzes für den Umrichter und zur Motorstillsetzung bei allen möglichen Störfällen ist eine Schutzvorrichtung (20) vorgesehen, die eine elektronische Schalteranordnung (21) zum Kurzschließen der Wicklungsphasen der Ankerwicklung (11) und eine die Schalteranordnung (21) im Störungsfall ansteuernde Steuervorrichtung (22) aufweist

## Beschreibung

Die Erfindung betrifft einen Synchronmotor gemäß dem Oberbegriff des Anspruchs 1.

Drehzahlgeregelte Synchronmotoren mit permanetmagnetischer Felderregung und einem Umrichter, der z.B. als Umrichter mit Zwischenkreis konzipiert ist, werden auch in einem Drehzahlbereich oberhalb der Nenndrehzahl betrieben. Die Führung des Synchronmotors in diesem Drehzahlbereich erfordert eine drehzahlabhängige Anpassung der Feldstromkomponente des Motorstroms. Hierzu wird ein "Feldschwächstrom" durch den Umrichter erzeugt.
Im fehlerfreien Betrieb ist - wie im Drehzahlbereich bis Nenndrehzahl - die im Drehzahlbereich oberhalb der Nenndrehzahl an der Ankerwicklung des Synchronmotors sichtbare Spannung immer gleich oder kleiner als die maximale Ausgangsspannung des Umrichters. Bei Netzausfall oder Fehlfunktion der Steuerlogik wird aber der erforderliche "Feldschwächstrom" nicht mehr aufgebracht. Dies hat zur Folge, daß die induzierte innere Spannung an den Anschlüssen des Synchronmotors sichtbar wird. Dadurch wird der Zwischenkreis über die Freilaufdioden des motorseitigen Wechselrichters aufgeladen. Steigt dabei die Spannung an dem Umrichter über einen zugelassenen maximalen Wert an, kommt es zu einer Zerstörung des Umrichters. Um eine solche Gefährdung des Umrichters auszuschließen ist eine Schutzvorrichtung gegen Überspannung vorgesehen.

Eine bekannte Schutzvorrichtung gegen Überspannung am Umrichter besteht aus einem Leistungswiderstand und einem Leistungstransistor, der in Abhängigkeit von der Zwischenkreisspannung von der Steuerlogik des Umrichters ein- und ausgeschaltet wird. Im Einschaltzustand liegt der Leistungswiderstand parallel zum Zwischenkreis, wodurch dem Zwischenkreis Energie entnommen und in dem Leistungswiderstand in Wärme umgesetzt wird. Eine solche Schutzvorrichtung ist nur bedingt wirksam und nicht für alle Störfälle geeignet. Fällt z.B. die Versorgungsspannung der Steuerlogik, die sog. Logikspannung aus, so fällt auch das Ansteuersignal für den Leistungstransistor aus, und dieser wird trotz Überspannung im Zwischenkreis nicht durchgeschaltet. Außerdem ist für einen wirksamen Schutz ein u. U. sehr kleiner Ohmwert des Bremswiderstands nötig, was einen sehr großen und teueren Leistungstransitor erforderlich macht.

Der Erfindung liegt die Aufgabe zugrunde, bei einem Synchronmotor der eingangs genannten Art die Schutzvorrichtung so zu verbessern, daß sie bei allen möglichen Störfällen einen zuverlässigen Schutz gewährleistet.

Die Aufgabe ist erfindungsgemäß durch die Merkmale des Anspruchs 1 gelöst.

Der erfindungsgemäße Synchronmotor hat den Vorteil, daß durch den im Störfall in extrem kurzer Ansprechzeit herbeigeführten Kurzschluß der Wicklungsphasen der Ankerwicklung der Synchronmotor sehr schnell bis zur Drehzahl Null abgebremst wird. Dies auch dann, wenn die Versorgungsspannung für die Steuerlogik des Umrichters ausfällt oder eine Funktionsstörung des Umrichters auftritt. Der Motorkurzschluß wird unmittelbar und ohne zusätzlich erforderliche Hilfsenergie ausgelöst. Durch das schnelle Stillsetzen des Synchronmotors wird sowohl ein Schutz für die vom Synchronmotor angetriebenen Arbeitsmaschinen als auch ein Schutz für das Bedienungspersonal erreicht.

Darüber hinaus wird durch den Kurzschluß der Wicklungsphasen der Ankerwicklung eine im Fehlerfall sich im Zwischenkreis aufbauende Spannung wirksam verhindert. Da die Schutzvorrichtung sehr schnell anspricht, werden auch momentane, kurze Spannungspitzen unterdrückt, so daß die Schutzvorrichtung auch einen bei allen Störfällen wirksamen Schutz des Umrichters gegen Überspannung und der damit verbundenen Zerstörung des Umrichters bietet.

Der schaltungstechnische Aufwand für die Schutzvorrichtung ist gering. Zusätzliche Versorgungsspannungen zur Ansteuerung der Schutzvorrichtung werden nicht benötigt.

Vorteilhafte Ausführungsformen des erfindungsgemäßen Synchronmotors mit zweckmäßigen Weiterbildungen und Ausgestaltungen der Erfindung sind in den weiteren Ansprüchen angegeben.

Gemäß einer bevorzugten Ausführungsform der Erfindung weist die elektronische Schalteranordnung in der Schutzvorrichtung einen an den Wicklungsphasen angeschlossenen Gleichrichter und mindestens einen an dem Gleichrichter angeschlossenen Leistungshalbleiterschalter auf. Der Gleichrichter kann ungesteuert, halbgesteuert oder vollgesteuert ausgeführt werden. Als Leistungshalbleiterschalter wird z.B. ein Leistungstransistor (IGBT) eingesetzt, doch kann auch ein Thyristor oder GTO, ein Triac, ein Diac, ein Halbleiterrelais (Solidstatrelais) oder dgl. verwendet werden. Bei einer dreiphasigen Ausführung von Ankerwicklung und Umrichter wird der dreiphasige Gleichrichter entweder in Brückenschaltung oder in Mittelpunkt- oder Sternschaltung ausgeführt. Im ersten Fall ist der mindestens eine Leistungshalbleiterschalter an dem Ausgang der Brückenschaltung angeschlossen, während im zweiten Fall der Leistungshalbleiterschalter einerseits mit dem Stern- oder Mittelpunkt des Gleichrichters und andererseits mit einem Zwischenkreisanschluß des motorseitigen Wechselrichters in dem als Zwischenkreisumrichter ausgeführten Umrichter verbunden ist.

In einer vereinfachten Variante enthält die elektronische Schalteranordnung einen an den Wicklungsphasen der Ankerwicklung angeschlossenen, von der Steuervorrichtung gesteuerten Gleichrichter, der vollgesteuert oder halbgesteuert sein kann.

Die Erfindung ist anhand eines in der Zeichnung dargestellten Ausführungsbeispiels im folgenden näher beschrieben. Es zeigen:
- Fig. 1: ein Blockschaltbild eines drehzahlregelbaren Synchronmotors mit einer Schutzvorrichtung für den Umrichter,
- Fig. 2: einen Schaltplan der Schutzvorrichtung in Fig. 1 gemäß einem ersten Ausführungsbeispiel,
- Fig. 3: einen Schaltplan der Schutzvorrichtung gemäß einem weiteren Ausführungsbeispiel in Verbindung mit dem Synchronmotor,
- Fig. 4 bis 6: jeweils einen Schaltplan der Schutzvorrichtung gemäß einem dritten, vierten bzw. fünften Ausführungsbeispiel.

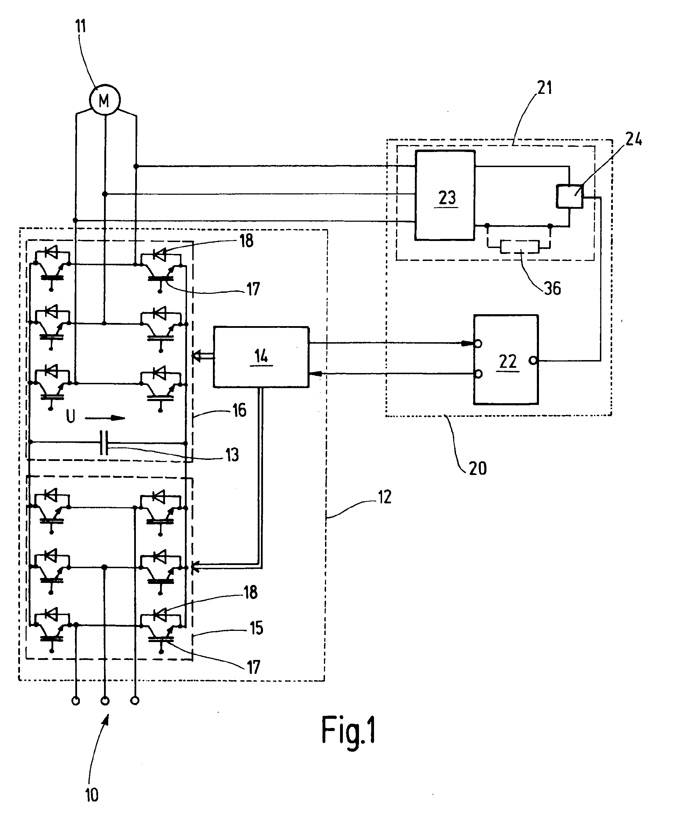

Der in Fig. 1 im Blockschaltbild dargestellte Synchronmotor mit permanentmangetischer Felderregung weist in bekannter Weise eine dreiphasige Ankerwicklung 11, die in Fig. 1 nur schematisch angedeutet ist, und einen die Ankerwicklung 11 an ein dreiphasiges Spannungsnetz 10 anschließenden dreiphasigen Umrichter 12 mit Zwischenkreis und einer Steuerlogik 14 auf. Der beispielhaft als Umrichter mit Gleichspannungs-Zwischenkreis ausgeführte Umrichter 12 weist in bekannter Weise einen netzseitigen Wechselrichter 15 und einen motorseitigen Wechselrichter 16 auf, zwischen denen ein Zwischenkreiskondensator 13 eingeschaltet ist. Jeder Wechselrichter 15, 16 ist mit Leistungstransistoren 17 in Brückenschaltung ausgeführt, wobei jedem Leistungstransistor 17 eine Freilaufdiode 18 parallelgeschaltet ist.

Der drehzahlgeregelte Synchronmotor mit permanentmagnetisch erzeugtem Luftspaltfeld wird auch in einem Drehzahlbereich oberhalb der Nenndrehzahl betrieben. Hierzu wird die von den Permanentmagneten erzeugte Ankerspannung durch einen vom Umrichter 12 generierten "Feldschwächstrom" drehzahlabhängig angepaßt. In einem Fehlerfall im Umrichter 12 wird durch eine Schutzvorrichtung 20 verhindert, daß die dann in Abhängigkeit von der Drehzahl in der Ankerwicklung 11 induzierte innere Spannung zu einer unzulässigen Überhöhung der Spannung am Umrichter 12 und damit zu einer Zerstörung des Umrichters 12 führt.

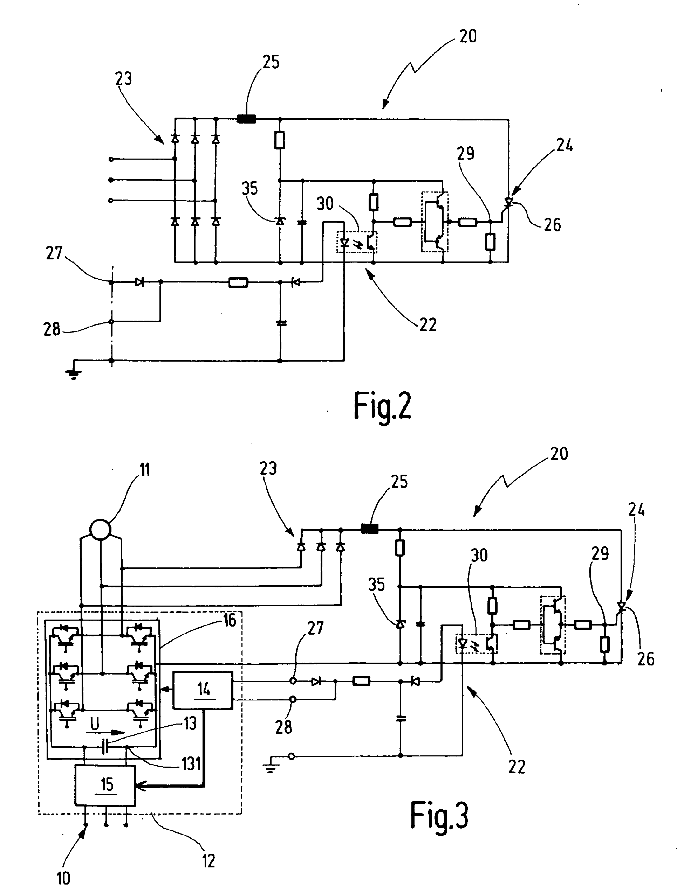

Die Schutzvorrichtung 20 weist eine an den Wicklungsphasen der Ankerwicklung 11 angeschlossene, elektronische Schalteranordnung 21 zum Kurzschließen der Wicklungsphasen sowie eine im Störungsfall die Schalteranordnung 21 ansteuernde Steuervorrichtung 22 auf. In dem in Fig. 1 dargestellten Blockschaltbild der Schutzvorrichtung besteht die elektronische Schalteranordnung 21 aus einem an den Wicklungsphasen der Ankerwicklung 11 angeschlossenen Gleichrichter 23 und einen an dem Gleichrichterausgang angeschlossenen Leistungshalbleiterschalter 24. Der Leistungshalbleiterschalter 24 ist vorzugsweise als Thyristor oder GTO ausgebildet, kann jedoch ein Leistungstransistor (IGBT), ein Triac, Diac oder ein Halbleiterrelais (Solidstatrelais) sein. Der Gleichrichter kann ein ungesteuerter, ein vollgesteuerter oder ein halbgesteuerter Gleichrichter in Brücken- oder Mittelpunktschaltung bzw. Sternschaltung sein. Das im Störungsfall von der Steuervorrichtung 22 generierte Steuersignal ist an den Steuereingang des Leistungshalbleiterschalters 24 und bei voll- oder halbgesteuertem Gleichrichter 23 auch an die Halbleiterschalter des Gleichrichters 23 geführt. Bei der gemäß Schaltplan nach Fig. 2 konzipierten Schutzvorrichtung 20 ist der Gleichrichter 23 als ungesteuerter Gleichrichter 23 in Brückenschaltung mit sechs Gleichrichterdioden ausgeführt. An dessen Ausgängen sind in Reihe eine Glättungsdrossel 25 und ein steuerbarer Thyristor 26 angeschlossen. Der Steuereingang des Thyristors 26 ist mit der Steuervorrichtung 22 verbunden, so daß im Störungs- oder Fehlerfall der Thyristor 26 durchgesteuert wird und über den Gleichrichter 23 die Wicklungsphasen der Ankerwicklung 11 kurzschließt.

Ein Beispiel für die Ausbildung der Steuervorrichtung 22 ist in Fig. 2 dargestellt. Die Steuervorrichtung 22 weist einen mit der Steuerlogik 14 verbundenen Signalpegel-Eingang 27, einen mit der Steuerlogik 14 verbundenen Rückmelde-Ausgang 28 sowie einen an dem Steuereingang des Thyristors 26 angeschlossenen Steuerspannungsausgang 29 auf. Zur Spannungsversorgung ist die Steuervorrichtung 22 an eine Zenerdiode 35 gelegt, die in Reihe mit einem Widerstand über die Glättungsdrossel 25 an den Ausgängen des Gleichrichters 23 angeschlossen ist. Im Normalbetrieb liegt am Signalpegel-Eingang 27 ein Signalpegel "logisch 1" (z.B. 24V Gleichspannung), der über einen Optokoppler 30 bewirkt, daß der Steuerspannungsausgang 29 und damit der Steuereingang des Thyristors 26 auf Nullpotential liegt. Im Fehlerfall, z.B. bei Wegfall der Logikspannung an der Steuerlogik 14, ändert sich der Signalpegel am Signalpegel-Eingang 27 von "logisch 1" auf "logisch 0"(0V Gleichspannung). Damit entfällt die Ansteuerung der Leuchtdiode des Optokopplers 30, und der Transistor des Optokopplers 30 sperrt. Als Folge davon tritt am Steuerspannungsausgang 29 eine Steuerspannung auf, die den Thyristor 26 durchschaltet. Damit sind die Wicklungsphasen der Ankerwicklung 11 kurzgeschlossen, und es ist sichergestellt, daß die durch den drehenden Rotor in der Ankerwicklung 11 induzierte innere Spannung den Umrichter 12 nicht zerstört. Zugleich wird der Synchronmotor bis zum Stillstand abgebremst.

Durch die Änderung des Signalpegels am Signalpegel-Eingang 27 ändert sich auch der Signalpegel am Rückmelde-Ausgang 28 der Steuervorrichtung 22 , so daß auch das zur Steuerlogik 14 gelangende Rückmeldesignal seinen Signalpegel verändert. In der Steuerlogik 14 wird nunmehr das Rückmeldesignal so ausgewertet, daß eine Bestromung der Ankerwicklung 14 zum Anlauf des Synchronmotors so lange unterbleibt wie der Kurzschluß der Wicklungsphasen besteht.

Das in Fig. 3 im Schaltplan dargestellte Ausführungsbeispiel für die Schutzvorrichtung 20 unterscheidet sich von der in Fig. 2 dargestellten Schutzvorrichtung 20 nur dadurch, daß der ungesteuerte Gleichrichter 23 in Mittelpunkt- oder Sternschaltung ausgeführt ist und der steuerbare Thyristor 26 anodenseitig über die Glättungsdrossel 25 an dem Sternpunkt des Gleichrichters 23 und kathodenseitig an dem einen Anschluß 131 des motorseitigen Wechselrichters 16 an dem Zwischenkreiskondensator 13 angeschlossen ist. Der Aufbau der Steuervorrichtung 22 ist identisch mit der zu Fig. 2 beschriebenen Steuervorrichtung 22, mit dem Unterschied, daß nunmehr zur Stromversorgung der Steuervorrichtung 22 die Zenerspannung der Glättungsdrossel 25 und dem besagten Anschluß 131 des motorseitigen Wechselrichters 16 an dem Zwischenkreiskondensator 13 abgegriffen ist.

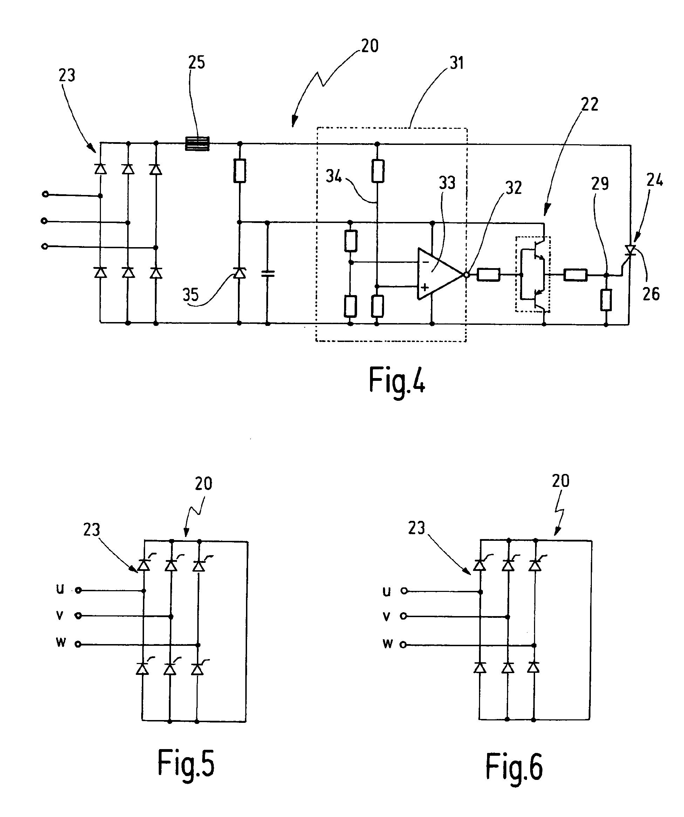

Bei der in Fig. 4 im Schaltplan dargestellten Schutzvorrichtung 20 wird das Fehlersignal nicht von der Steuerlogik 14 geliefert, sondern von einer Elektronik 31 abgenommen, die die gleichgerichtete Motorspannung mißt und bei Überschreiten eines Vorgabewerts das Fehlersignal an ihren Ausgang 32 legt. Als Meßspannung wird die geglättete Gleichspannung am Ausgang des Gleichrichters 23 verwendet, die über einen Spannungsteiler 34 entsprechend angepaßt wird. Die Steuervorrichtung 22, deren Versorgungsspannung wie zu Fig. 3 beschrieben wiederum an der Zenerdiode 35 abgegriffen ist, setzt das Fehlersignal in eine Steuerspannung für den Thyristor 26 um. In dem in Fig. 4 im Schaltplan dargestellten Ausführungsbeispiel für die Elektronik 31 ist ein Komparator 33 vorgesehen, an dessen nichtinvertierendem Eingang ein vom Spannungsteiler 34 abgegriffenes Maß für die Gleichspannung am Ausgang des Gleichrichters 23 gelegt ist. An dem invertierenden Eingang des Komparators 33 liegt eine von der Versorgungsspannung abgeleitete Bezugsspannung, die gleich oder wenig kleiner ist als die maximal zulässige Ausgangsspannung am Gleichrichter 23. Solange die Bezugsspannung nicht überschritten ist, steht am Ausgang des Komparators 33 ein solches Potential an, daß der Steuerspannungsausgang 29 der Steuervorrichtung 22 auf Nullpotential liegt und damit der Thyristor 26 gesperrt ist. Wird die Bezugsspannung durch die am Gleichrichterausgang abgegriffene Gleichspannung überschritten, so ändert sich der Ausgangszustand des Komparators 33, wodurch am Steuerspannungsausgang 29 der Steuervorrichtung 22 eine positive Spannung auftritt, die zur Zündung und Durchschaltung des Thyristors 26 führt.

Bei den in Fig. 5 und 6 teilweise dargestellten Ausführungsbeispielen für eine Schutzvorrichtung 20 ist der Leistungshalbleiterschalter 24 entfallen, so daß die elektronische Schalteranordnung 21 nur noch einen vollgesteuerten Gleichrichter 23 (Fig. 5) bzw. einen halbgesteuerten Gleichrichter (Fig. 6) umfaßt, der gleichspannungsseitig kurzgeschlossen ist. Die Halbleiterschalter des Gleichrichters 23 sind Leistungshalbleiterschalter. Sie sind im störungsfreien Betrieb gesperrt und werden im Fehlerfall von dem am Steuerspannungsausgang 29 der Steuervorrichtung 22 generierten Steuersignal aufgesteuert.

Für bestimmte Motorentypen kann es erforderlich sein, zum Schutze des Motors den Kurzschlußstrom zu begrenzen. Hierzu wird ein Widerstand 36 in Reihe mit Gleichrichter 23 und Leistungshalbleiterschalter 24 angeordnet, wie dies in Fig. 1 strichliniert dargestellt ist.

Die beschriebene Schutzvorrichtung ist nicht nur bei Synchronmotoren mit einem Zwischenkreis-Umrichter (indirekter Umrichter mit eingeprägter Spannung oder eingeprägtem Strom im Zwischenkreis) einsetzbar. Mit gleichen Vorteilen kann sie auch in Synchronmotoren mit einem direkten Umrichter 12 integriert werden.

Es wäre denkbar, auch die Leistungstransistoren 17 des motorseitigen Wechselrichters 16 einzusetzen, um im Störfall den Kurzschluß der Wicklungsphasen der Ankerwicklung 11 herbeizuführen. Eine solche Maßnahme ist jedoch weit weniger effektiv als die beschriebene Schutzvorrichtung, da zum Ansteuern der Leistungstransistoren Hilfsenergie erforderlich ist, die bei bestimmten Arten von Störfällen nicht zur Verfügung steht, somit bei diesen Störfällen kein Schutz gewährleistet ist. Eine solche Maßnahme würde auch anderweitigen, oft mit den Wechselrichter-Leistungstransistoren verknüpften Sicherheitseinrichtungen, wie z.B. "Schutz gegen Wiederanlauf des Motors", entgegenstehen, die aus Gründen des Personenschutzes bei stillstehendem Motor ein Sperren der Leistungstransistoren des Umrichters bewirken, um einen Wiederanlauf des Motors sicher auszuschließen, solange Sicherheitsschranken an der Arbeitsmaschine nicht in die vorschriftsmäßige Stellung gebracht sind, z.B. Lichtschranken unterbrochen sind. Die Sperrung der Leistungstransistoren 17 erfolgt dabei direkt über einen Hardwareeingang am Umrichter 12, der von den Sicherheitsschranken angesteuert wird.

## Patentansprüche

1. Synchronmotor mit permanentmagnetischer Felderregung, mit einer mehrphasigen Ankerwicklung (11), einem die Ankerwicklung (11) an ein Spannungsnetz (10) anschließenden, mehrphasigen Umrichter (12), einer Steuerlogik (14) zur Umrichtersteuerung und mit einer Schutzvorrichtung (20), **dadurch gekennzeichnet, daß** die Schutzvorrichtung (20) eine mit den Wicklungsphasen (11) zu deren Kurzschließen verbundene, elektronische Schalteranordnung (21) und eine die Schalteranordnung (21) im Störungsfall ansteuernde Steuervorrichtung (22) aufweist.

2. Synchronmotor nach Anspruch 1, **dadurch gekennzeichnet, daß** die elektronische Schalteranordnung (21) einen an den Wicklungsphasen der Ankerwicklung (11) angeschlossenen, von der Steuervorrichtung (22) gesteuerten Gleichrichter (23) aufweist.

3. Synchronmotor nach Anspruch 1, **dadurch gekennzeichnet, daß** die elektronische Schalteranordnung (21) einen an den Wicklungsphasen der Ankerwicklung (11) angeschlossenen Gleichrichter (23) und mindestens einen an dem Gleichrichter (23) angeschlossenen, von der Steuervorrichtung (22) gesteuerten Leistungshalbleiterschalter (24) aufweist.

4. Synchronmotor nach Anspruch 3, **dadurch gekennzeichnet, daß** Ankerwicklung (11) und Umrichter (12) dreiphasig sind und der Gleichrichter (23) dreiphasig in Brückenschaltung ausgeführt ist und daß der mindestens eine Leistungshalbleiterschalter (24) an dem Brückenausgang angeschlossen ist.

5. Synchronmotor nach Anspruch 3, **dadurch gekennzeichnet, daß** Ankerwicklung (11) und Umrichter (12) dreiphasig ausgebildet sind, daß der Umrichter (12) einen an einem Zwischenkreis angeschlossenen, motorseitigen Wechselrichter (16) mit in Brückenschaltung angeordneten Leistungshalbleiterschaltern (17) aufweist, denen jeweils eine Freilaufdiode (18) parallelgeschaltet ist, daß der Gleichrichter (23) dreiphasig in Sternschaltung ausgeführt ist und daß der mindestens eine Leistungshalbleiterschalter (24) einerseits mit dem Sternpunkt und andererseits mit einem Zwischenkreisanschluß (131) des motorseitigen Wechselrichters (16) verbunden ist.

6. Synchronmotor nach einem der Ansprüche 3 - 5, **dadurch gekennzeichnet, daß** die Steuervorrichtung (22) so ausgebildet ist, daß sie in einem Störungsfall den Leistungshalbleiterschalter (24) schließt.

7. Synchronmotor nach Anspruch 6, **dadurch gekennzeichnet, daß** im Störungsfall an der Steuervorrichtung (22) ein Fehlersignal anliegt, welches von der Steuervorrichtung (22) in eine Steuerspannung für den Leistungshalbleiterschalter (24) umsetzbar ist.

8. Synchronmotor nach Anspruch 7, **dadurch gekennzeichnet, daß** das Fehlersignal von der Steuerlogik (14) zur Umrichtersteuerung als Signalpegel abgenommen ist.

9. Synchronmotor nach Anspruch 8, **dadurch gekennzeichnet, daß** die Steuervorrichtung (22) so ausgebildet ist, daß sie bei Änderung des Signalpegels von "logisch 1" auf "logisch 0" die Steuerspannung generiert.

10. Synchronmotor nach Anspruch 7, **dadurch gekennzeichnet, daß** das Fehlersignal von einer Elektronik (31) abgenommen ist, die die gleichgerichtete Motorspannung mißt und bei Überschreiten eines Vorgabewerts das Fehlersignal generiert.

11. Synchronmotor nach Anspruch 10, **dadurch gekennzeichnet, daß** die gleichgerichtete Motorspannung am Ausgang des Gleichrichters (23) abgenommen ist.

12. Synchronmotor nach einem der Ansprüche 7 - 11, **dadurch gekennzeichnet, daß** die Steuervorrichtung (22) bei Anliegen eines Fehlersignals ein Rückmeldesignal generiert, das in der Steuerlogik (14) für die Umrichtersteuerung in der Weise auswertbar ist, daß für die Dauer des Rückmeldesignals eine Bestromung der Ankerwicklung (11) durch den motorseitigen Wechselrichter (16) unterbunden ist.

13. Synchronmotor nach einem der Ansprüche 3 - 12, **dadurch gekennzeichnet, daß** der mindestens eine Leistungshalbleiterschalter (24) ein Thyristor (26), Triac, Diac, Leistungstransistor (IGBT) oder ein Halbleiterrelais (Solidstatrelais) ist.

14. Synchronmotor nach einem der Ansprüche 3 - 13, **dadurch gekennzeichnet, daß** zwischen Gleichrichter (23) und Leistungshalbleiterschalter (24) ein Bremswiderstand (36) einschaltbar ist.
